**Europäisches Patentamt**

**European Patent Office**

**Office européen des brevets**

(19)

(11) Veröffentlichungsnummer : **0 042 564**
**B1**

(12) **EUROPÄISCHE PATENTSCHRIFT**

(45) Veröffentlichungstag der Patentschrift :
**28.12.83**

(51) Int. Cl.³ : **B 65 B 13/32**, B 65 B 13/06

(21) Anmeldenummer : **81104582.2**

(22) Anmeldetag : **13.06.81**

(54) **Maschine zum Umreifen von Packstücken mittels eines schweissbaren Kunststoffbandes.**

(30) Priorität : **24.06.80 DE 3023526**

(43) Veröffentlichungstag der Anmeldung :
**30.12.81 Patentblatt 81/52**

(45) Bekanntmachung des Hinweises auf die Patenterteilung : **28.12.83 Patentblatt 83/52**

(84) Benannte Vertragsstaaten :
**AT BE CH DE FR GB IT LI LU NL SE**

(56) Entgegenhaltungen :
**DE-A- 1 629 160**
**DE-A- 2 532 217**
**DE-A- 2 818 325**

(73) Patentinhaber : **Berning & Söhne GmbH & Co.**
**Oberdörnen 64-72**
**D-5600 Wuppertal 2 (DE)**

(72) Erfinder : **Röhrig, Klaus**
**Werth 60**
**D-5600 Wuppertal 2 (DE)**

(74) Vertreter : **Sonnet, Bernd et al**
**Stresemannstrasse 6-8 Postfach 20 13 27**
**D-5600 Wuppertal 2 (DE)**

Maschine zum Umreifen von Packstücken mittels eines schweißbaren Kunststoffbandes

Die Erfindung betrifft eine Maschine zum Umreifen von Packstücken mittels eines schweißbaren Kunststoffbandes, wobei zwischen die miteinander zu verschweißenden, sich überlappenden Bandenden vorübergehend ein Heizelement einfügbar ist, die angeschmolzenen Flächen der Bandenden mit einem Preßorgan aneinander und gegen eine Bandanlagefläche gedrückt werden und wobei ferner eine mindestens ein Bandende vorübergehend festlegende Bandklemme sowie am Bandeinlauf eine Messer und Gegenmesser aufweisende Bandtrennvorrichtung vorgesehen sind.

Maschinen der vorausgesetzten Art sind in zahlreichen Ausführungen bekannt (Siehe z. B. DE-A 1-2 818 325). Ein technischer Schwerpunkt solcher Maschinen liegt in der konstruktiven Gestaltung und Auslegung des Bandverschluß-Aggregats, welches über sehr viele Teile verfügt, die funktionsnotwendig miteinander taktgesteuert auf das Band einwirken müssen. Hieraus resultieren gewisse Schwierigkeiten, weil an Maschinen zum Umreifen von Packstückstücken hohe Leistungsansprüche gestellt werden, jedoch ein Maschine, deren Bandverschluß-Aggregat über besonders viele Teile verfügt, häufig in besonderem Maße störanfällig und/oder weniger leistungsfähig ist.

Aufgabe der Erfindung ist es, eine Maschine zum Umreifen von Packstücken mittels eines schweißbaren Kunststoffbandes der im Oberbegriff des Anspruchs 1 vorausgesetzten Art derart zu verbessern, daß diese bei einfacher Gestaltung des Bandverschluß-Aggregats, welches über nur relativ wenige Einzelteile verfügt, besonders leistungsfähig und wenig störanfällig ist.

Die Erfindung löst diese Aufgabe im wesentlichen dadurch, daß das Preßorgan um eine sich mindestens annähernd parallel zur Verschlußebene und etwa senkrecht zur Bandlängsrichtung erstreckende Achse umlaufend rotierbar angeordnet ist, wobei die Bandanlagefläche die freie Kreisbahn des Preßorgans schneidet und wobei Bandanlagefläche und Preßorgan über ihren etwa der Länge der von dem Heizelement erzeugten Schweißzone entsprechenden Kontaktweg hinweg — bei Zwischenlage der beiden Bandenden — entgegen Wirkung einer Rückstellkraft ausweichbar gegeneinander drücken.

Dadurch, daß das Preßorgan eine umlaufende Rotationsbewegung ausübt, kann es direkt mit einer Antriebswelle gekuppelt werden, so daß besondere Steuerungsmaßnahmen für eine ansonsten übliche lineare Hin- und Herbewegung entfallen können. Da Preßorgan und Bandanlagefläche — bei Zwischenlage der beiden Bandenden — entgegen Wirkung einer Rückstellkraft ausweichbar gegeneinander drücken, erfolgt der Anpreßvorgang nicht großflächig über die gesamte Länge des Kontaktwegs hinweg gleichzeitig, vielmehr streicht das Preßorgan in Bandlängsrichtung über die Schweißzone der Bandenden hinweg. Es findet hier also mehr eine punktuell fortschreitende Verbindung statt, die den Vorteil geringerer Anfälligkeit besitzt, weil etwaige Verunreinigungen wesentlich weniger Einfluß auf die Haltbarkeit der Bandverschweißung besitzen als bei flächigem Totalandruck. Durch das gegen Wirkung einer Rückstellkraft ausweichbare Gegeneinanderdrücken von Heizelement und Bandanlagefläche ist eine besonders einfache konstruktive Auslegung möglich. Hierbei kann die Bandanlagefläche gegenüber einem starr umlaufenden Preßorgan nachgiebig gelagert sein. Nach einer anderen Verwirklichung des Erfindungsgedankens könnte sowohl die Bandanlagefläche als auch das Preßorgan je für sich starr gehalten sein, während das das Preßorgan tragende Bauteil, namentlich eine Welle, ausweichbar gelagert werden könnte. Die Ausweichbewegung könnte auch auf die miteinander kontaktierenden Bauteile aufgeteilt werden.

Eine besonders vorteilhaft erscheinende Weiterbildung der Maschine nach Anspruch 1 besteht in einer dritten Möglichkeit der ausweichbaren Anordnung, die dadurch gekennzeichnet ist, daß die Bandanlagefläche als im wesentlichen starres Widerlager für das Preßorgan ausgebildet ist, welches entgegen Wirkung einer Rückstellfeder quer zu seiner Rotationsachse verschieblich gelagert ist. Der Vorteil dieser Ausgestaltung ist im wesentlichen der, daß lediglich das Druckorgan selbst verschieblich zu lagern bzw. abzufedern ist. Dies kann mit Vorteil dergestalt geschehen, daß das Preßorgan an einem auf einer mit seiner Rotationsachse fluchtenden Steuerwelle endseitig angeordneten Kopfstück verschieblich gelagert ist. Es genügt also, das Druckstück innerhalb des Kopfstücks auf einer Druckfeder abgestützt zu lagern. Da das Kopfstück dann selbst lediglich eine starre, d. h. quer unnachgiebige, Rotationsbewegung ausführt, kann es in sehr einfacher und funktionssicherer Weise zu weiteren Bandverschluß-Aufgaben, beispielsweise zur Bandtrennung, herangezogen werden. Demzufolge ist nach einem weiteren Merkmal der Erfindung vorgesehen, daß an dem Kopfstück das Messer befestigt ist. Dabei ist das im wesentlichen plattenförmige Messer etwa am Umfang des Kopfstücks angeordnet und begrenzt einen sich von der Messerschneide in Richtung auf das im Drehsinn dahinter angeordnete Preßorgan erstreckenden Bandführungskanal, der in vorteilhafter Weise zum Bandeinlauf hin erweitert ist. Das Messer besitzt damit eine Mehrfachfunktion insoweit, als es einmal die miteinander zu verschweißenden Bandenden voneinander distanziert und sie soweit und solange auseinanderhält, als ihr gegenseitiger Kontakt noch nicht erwünscht ist. Zum anderen begrenzt es den Bandeinlaufkanal mit dem besonderen Vorteil, daß es als Verschlußelement für eine im Kopfstück angebrachte einfache Nut dienen kann. Schließlich besitzt das Messer selbstverständlich im Zusammenwirken mit einem maschinengestellfesten Gegenmesser Bandtrennfunktion. Das Band wird mithin zwischen den Schneiden von Messer und Gegenmesser und durch das Kopfstück hindurch geführt. Daß sich der Bandführungskanal zum Bandeinlauf hin erweitert, besitzt den Vorteil, daß das freie Bandende jederzeit besonders störungsfrei den Weg durch den Bandführungskanal nehmen kann. Gleichzeitig ergibt sich der wesentliche Vorteil einer günstigen Anordnung des rotationseinheitlich mit dem Druckorgan verbundenen Bandführungskanals in der Bandzufuhrstellung, in der Preßorgan und Messer ihre Funktionen noch nicht ausüben. Von dort bis zu seiner Anlage an der Bandanlagefläche kann sich das Preßorgan mit dem Kopfstück verdrehen, während sich das Band noch im Bandführungskanal befindet, bis die aus Messer und Gegenmesser bestehende Trennvorrichtung wirksam wird, was zweckmäßig im unmittelbaren Anschluß nach Beginn des Druckkontaktes des Preßorgans an der Bandauflagefläche geschieht. Dann nämlich wirkt das Preßorgan zugleich als Bandklemme, die verhindert, daß das jetzt freie hintere Bandende infolge der Rückszugspannung des um das Packstück gestrammten Bandes sich locker oder gar aus dem Aggregat herausgezogen werden kann. Extrem vorteilhaft ist es, daß die Doppelfunktion des Preßorgans eine separate Bandklemme und ihre Steuermittel entberlich macht.

In diesem Zusammenhag ist ein weiteres Erfindungsmerkmal von Bedeutung, welches darin besteht, daß der Abstand zwischen der Messerschneide und dem ungespannten Preßorgan im wesentlichen gleich der Länge des Kontaktweges von Preßorgan und Bandanlagefläche ist. Berührt das Preßorgan mittelbar über die aufeinanderzupressenden Bandenden die Bandanlagefläche und hat das Messer das zugeführte Band getrennt, wird infolge des fortschreitenden Preß- und Rotationsvorgangs das nunmehr freie hintere Bandende selbsttätig aus dem Bandführungskanal herausgezogen. Es wird dann bis zu seinem freien Ende an dem vorderen Bandende festgedrückt. Will man, was bei verschiedenen Verschlüssen erwünscht ist, einen Aufreißabschnitt am Bandverschluß erhalten, ist dies auf einfache Weise dadurch möglich, daß man den Abstand zwischen der Messerschneide und dem ungespannten Preßorgan so wählt, daß er um die Länge des gewünschten, nicht verschweißten und als Handhabe dienenden Bandendabschnittes länger ist als die Länge des Kontaktwegs von Preßorgan und Bandanlagefläche.

Da bei der erfindungsgemäß ausgebildeten Maschine die Bandanlagefläche die freie Kreisbahn des Preßorgans schneidet — wobei unter « freie Kreisbahn » die Bahn des nicht eingerückt starr umlaufenden Preßorgans verstanden werden soll — und da andererseits das Messer nicht mit der Bandanlagefläche in Kontakt geraten darf sowie ein ausreichend großer abgetrennter und für die Verschweißung bereitstehender Bandendabschnitt erhalten werden muß, ist zur Vermeidung komplizierter Steuerungsmechanismen gemäß weiterer Ausbildung vorgesehen, daß dem Preßorgan eine es zurückdrängende Steuerfläche zugeordnet ist, die im Wirkbereich des Gegenmessers angeordnet ist und geringfügig gegenüber diesem vorsteht. Auf diese Weise wird mit sehr einfachen Mitteln, die in Folge der nachgiebigen Lagerung des Preßorgans möglich sind, ein Vorbeiführen des am weitesten vorstehenden Preßorgans am Gegenmesser ermöglicht.

Das zur Herstellung der Verschweißung der Bandenten erforderliche Heizelement könnte grundsätzlich durch eine selbstständige Steuereinrichtung z. B. in Richtung der Rotationsachse des Preßorgans hin- und herbewegt werden. Da sich die Erfindung jedoch darum bemüht, eine besonders einfach ausgebildete Maschine in Vorschlag zu bringen, sieht ein weiteres vorteilhaftes Merkmal vor, daß in den zwischen dem Preßorgan und der Bandanlagefläche sowie zwischen den Bandenden ausgebildeten Zwickel das Heizelement taktgesteuert einrückbar ist und durch druckschlüssige Einwirkung des Preßorgans von diesem zwischen den Bandenden vortreibbar ist. Der besondere Vorteil dieser Anordnung und Ausbildung ist der, daß zu Rückführung des Heizelementes grundsätzlich keine besonderen Steuerungsmittel erforderlich sind, weil die Rückführung dadurch geschieht, daß das Druckorgan das Heizelement vor sich her und aus dem Bandeingriffsbereich herausschiebt. Lediglich für die Rest-Rückführung könnte eine separate Zwangssteuerung zweckmäßig sein. Ein weiterer Vorteil besteht darin, daß das durch das Preßorgan druckschlüssig vorgeschobene Heizelement jeweils in einem unmittelbar vor dem Druckkontakt liegenden Bereich die Bandenden anschmelzt. Auf diese Weise wird eine optimale Bandverschweißung erzielt, weil der Andruck stets in unmittelbar erhitzten und angeschmolzenen Bandebereich stattfindet. Es können sich somit auch keine Verunreinigungen an den aufgeschmolzenen Bandpartien festsetzen.

Eine vorteilhafte weitere Ausbildung besteht darin, daß das Heizelement eine Heizpatrone geringen Durchmessers ist und in dichter Zuordnung parallel zur Bandanlagefläche um eine quer zur Rotationsachse des Preßorgans verlaufende Achse schwenkbar angeordnet ist. Zweckmäßig ist diese Achse im Bereich der Tischplatte angeordnet. Beim Vortreiben des Heizelements weicht dieses unter die Tischplatte zurück.

Ein weiteres Erfindungsmerkmal besteht darin, daß die Bandanlagefläche und der Unterseite einer nach Vollendung des Schweiß- und Preßvorgangs vorübergehend aus der Umreifungsebene entfernbar angeordneten Tischplatte ausgebildet ist. Wird die insbesondere ebene Tischplatte nach Fixierung der Bandenden kurzfristig zur Seite bewegt, kann sich das Band im Verschlußbereich an das Packgut legen und letzteres von der Maschine entfernt werden.

Hinsichtlich einer einfachen, weniger Einzelteile benötigenden und störunanfälligen Steuerung ist vorgesehen, daß die Bandklemme, die Tischplatte und der Schweißwiderstand mindestens über Teile ihrer jeweiligen Bewegungsbahn hinweg durch an der Steuerwelle angeordnete Mitnehmer bzw. Nocken taktgesteuert bewegbar sind. Teile der Bewegungsbahnen können durch elektromagnetische, hydraulische, pneumatische oder ähnliche Organe gesteuert werden.

Zweckmäßig und vorteilhaft ist es schließlich, daß einem Arbeitszyklus der Maschine eine volle Umdrehung der Steuerwelle und des mit ihr verbundenen Preßorgans entspricht.

Insgesamt stellt die Erfindung eine Maschine zum Umschnüren von Packstücken mittels eines schweißbaren Kunststoffbandes zur Verfügung, die sehr einfach ausgebildet sein kann, weil ihr Bandverschluß-Aggregat nur wenige, steuerungstechnisch leicht beherrschbare Teile besitzt. Dank der einfachen Steuerungsmöglichkeit für diese Teile kann die Maschine mit einer hohen Taktzahl störunanfällig arbeiten.

Die Erfindung ist nachfolgend in einem Ausführungsbeispiel anhand der Zeichnungen, die auch den Arbeitsablauf veranschaulichen, im einzelnen erläutert. In den Zeichnungen zeigen :

Figur 1 eine schematische Ansicht einer Maschine mit im Abstand um ein Packstück herumgeführten Band,

Figur 2 eine Darstellung nach Fig. 1 mit um das Packstück herumgelegtem Band,

Figuren 3, 5, 7, 9 und 11 schematische Ansichten der Maschine im Bereich des Bandverschluß-Aggregats in den verschiedenen Arbeitspositionen,

Figuren 4, 6, 8, 10 und 12 die entsprechenden schematischen Aufsichten, Figuren 13 und 14 die Steuerung einer Bandklemme.

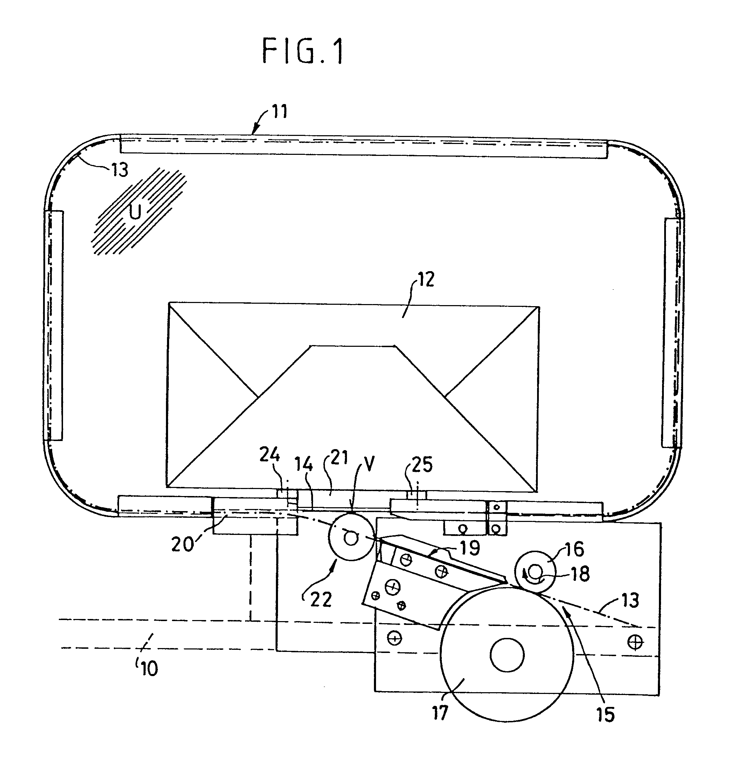

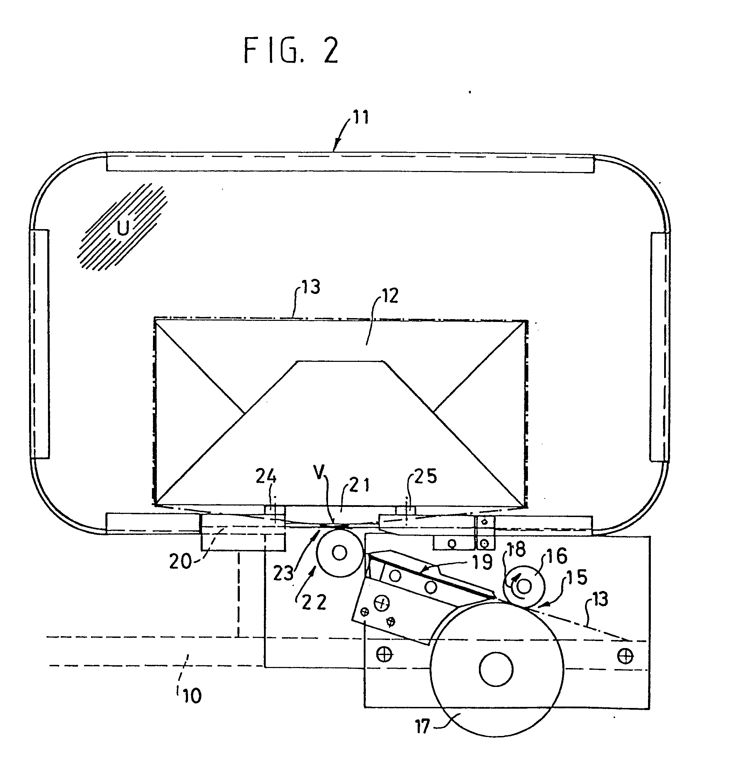

Bei der in den Fig. 1 und 2 veranschaulichten Maschine zum Umreifen von Packstücken mittels eines schweißbaren Kunststoffbandes ist an einem nicht näher dargestellten Maschinengestell 10 ein umlaufender Bandführungsrahmen 11 vorgesehen, der einen Tunnel zum Hindurchführen eines Packstücks 12 bildet. Das Band 13 kann mit dem freien Bandende 14 vorweg mittels einer Bandeinschußvorrichtung 15 durch einen auf der Innenseite des Bandführungsrahmens 11 vorgesehenen Bandkanal herumgeführt werden. Dieser Bandkanal ist — wie an ähnlichen Maschinen bekannt — öffenbar, so daß das Band 13 dem Rahmen herausgezogen werden kann. Die Bandeinschußvorrichtung 15 ist in Bandlaufrichtung vor einem nicht gezeigten Bandvorrat angeordnet und besteht aus einem Walzenpaar 16, 17, bei dem die Walze 16 in beiden Drehrichtungen motorisch antreibbar ist und die Walze 17 als Gegendruckwalze dient. Wird die Walze 16 in Richtung des Pfeiles 18 angetrieben, wird das Band 13 über eine maschinengestellseitige Bandführung 19 in den Umlaufkanal 20 des Bandführungsrahmens 11 eingeführt. Nach dem Umlauf des Bandes 13 innerhalb des Bandführungsrahmens 11 wird das vordere freie Bandende 14 festgeklemmt, und die Zuführwalze 16 entgegen der Pfeilrichtung 18 bewegt, wodurch das Band 13 Zugspannungen erfährt, die es aus dem Umlaufkanal 20 herausziehen, so daß es um das Packstück 12 unter Spannung herumgezogen werden kann. Das Packstück 12 liegt auf einer Tischplatte 21 auf, unterhalb der sich das Bandverschluß-Aggregat 22 befindet, welches in den Fig. 1 und 2 schematisch mit einem Kreis dargestellt ist und anhand der übrigen Figuren im einzelnen beschrieben wird. Nach Herstellung des verschweißten Bandverschlusses 23 kann die Tischplatte 21, die zwischen zwei Rahmenteilen 24, 25 geführt ist, senkrecht zur Zeichenebene der Fig. 1 und 2 aus der vom Band 13 gebildeten Umreifungsebene U herausbewegt werden, so daß das Band freigegeben wird und sich an die Unterseite des Packstücks 12 anlegen kann. Sodann kann das umreifte Packstück 12 der Maschine entnommen werden.

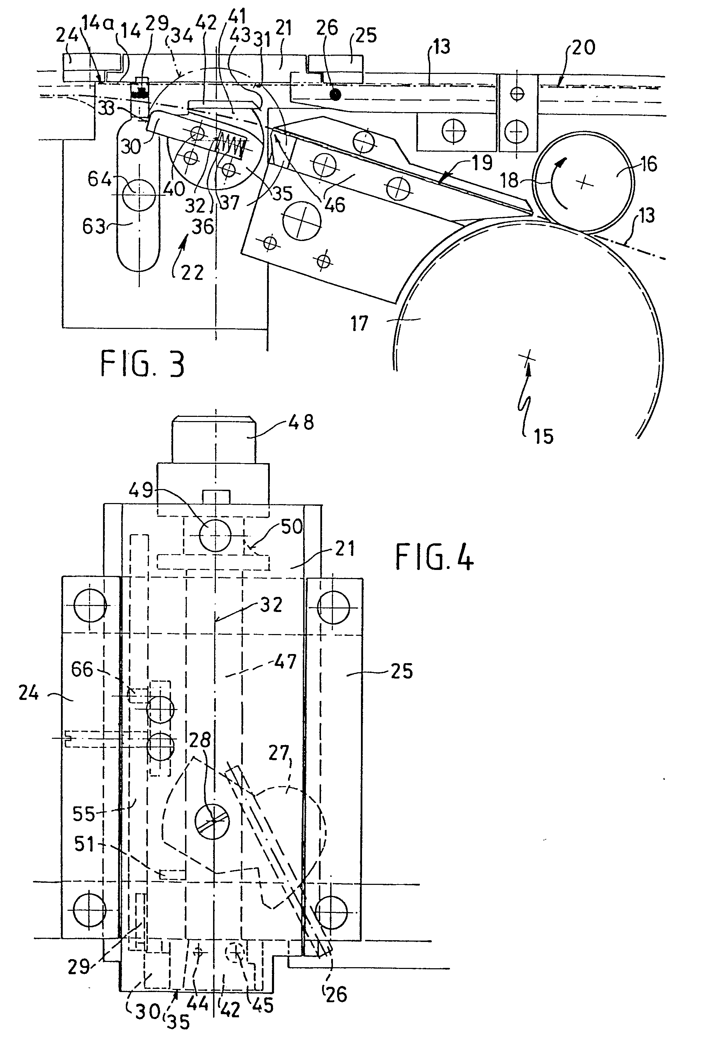

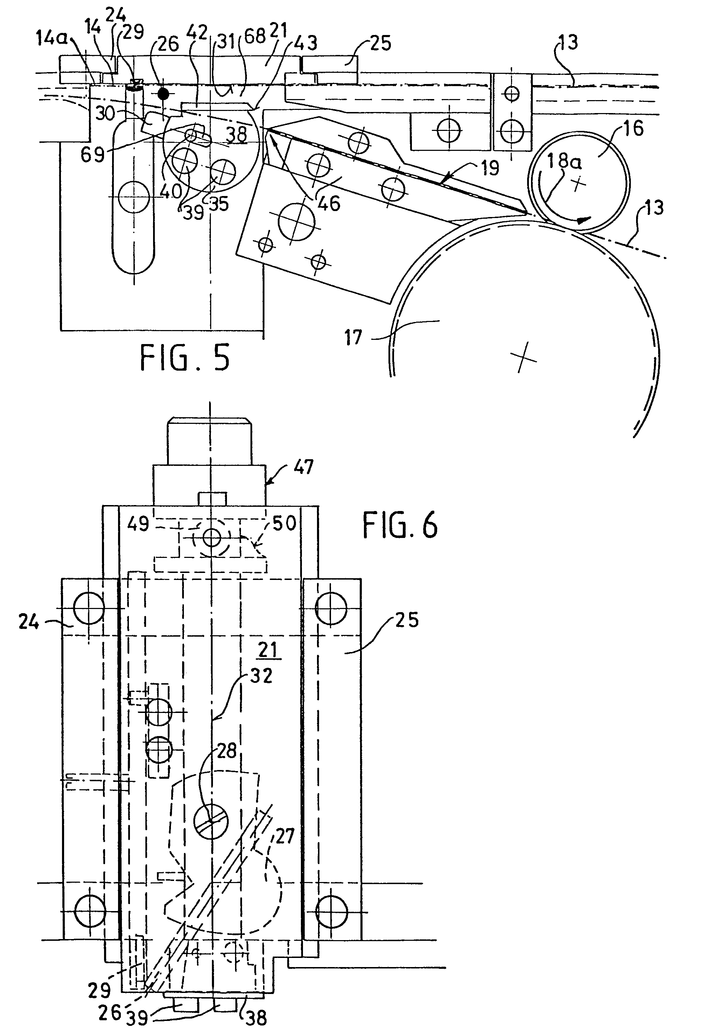

Zur Herstellung eines Bandverschlusses müssen die Bandenden innerhalb eines Überdeckungsbereichs mittels eines Heizelementes aufgeschmolzen und mittels eines Preßorgans aneinander gedrückt werden und es muß innerhalb des zugeführten Bandabschnitts ein Trennschnitt erfolgen. Die nach der Erfindung ausgebildeten Mittel, die dies bewirken, sind unterhalb der Tischplatte 21 vorgesehen und sollen jetzt an Hand der schematischen Figuren 3 und 4 beschrieben werden. Zunächst ist ein Heizelement 26 — hier in Gestalt einer im Querschnitt kleinen Heizpatrone — unterhalb der Tischplatte 21 vorgesehen. Das Heizelement 26 ist an einem Halter 27 befestigt, der seinerseits um eine zur Tischplattenebene vertikale Achse 28 herum schwenkbar angeordnet ist. Im Bereich des positionierten freien Bandendes 14 ist eine taktgesteuerte Bandklemme 29 vorgesehen, die das vordere freie Bandende 14 zwischen sich und der Unterseite der Tischplatte 21 einklemmen kann. Zwischen der Bandklemme 29 und dem entsprechend der Darstellung in Fig. 3 in der nicht wirksamen Stellung befindlichen Heizelement 26 ist umlaufend rotierbar ein Preßorgan 30 vorgesehen. Das Preßorgan 30 ist zum druckschlüssigen Kontakt mit einer Bandanlagefläche 31 vorgesehen, die beim Ausführungsbeispiel von der — hier ebenen — Unterseite des Tisches 21 gebildet wird. Der Druckkontakt zwischen Preßorgan und Bandanlagefläche erfolgt selbstverständlich unter Zwischenlage der miteinander zu verschweißenden Bandendabschnitte. Die Rotation des Preßorgans 30 erfolgt in der Umschnürungsebene des Bandes 13. Die Rotationsachse des Preßorgans 30 ist mit 32 bezeichnet. Sie erstreckt sich hier parallel zur Tischplatte 21 und außerhalb der Umschnürungsebene senkrecht zu dieser. Wäre die Bandanlagefläche 31 nicht vorhanden, würde sich das Druckorgan 30 mit seiner freien Stirnfläche 33 auf einer freien Kreisbahn bewegen, die mit der gestrichelten Linie 34 veranschaulicht ist. Diese freie Kreisbahn wird jedoch von der tischunterseitigen Bandanlagefläche 31 geschnitten. Deshalb ist beim Ausführungsbeispiel das Preßorgan 30 entgegen Wirkung einer Rückstellkraft ausweichbar gelagert. Diese Lagerung erfolgt an einem Kopfstück 35, welches etwa trommelförmig ausgebildet ist. Dieses Kopfstück 35 enthält in etwa radialer Anordnung einen nach außen offenen nutförmigen Aufnahmeraum 36 für eine Druckfeder 37 und das Preßorgan 30. Die Druckfeder 37 bewirkt die Rückstellkraft und belastet das Preßorgan 30 stets in seine nach außen vortretende Endlage. Die Frontseite des Kopfstücks 35 wird zur Lagesicherung des Preßorgans 30 und der Druckfeder 37 von einer Verschlußplatte 38 verschlossen, die mit Hilfe zweier Schrauben 39 am Kopfstück 35 festlegbar ist (Fig. 5). Zur Lagebegrenzung des Preßorgans 30 besitzt dieses einen Querstift 40, der in einem Langloch 69 der Verschlußplatte 38 geführt ist. Beim Ausführungsbeispiel deckt die Verschlußplatte 38 einen Bandeinführungskanal 41 mit ab, der in dem Kopfstück 35 vorgesehen ist.

An dieser Stelle sei darauf hingewiesen, daß die erfindungsgemäße Ausgestaltung der Maschine es auch zuließe, das Band 13 nicht in seiner Längsrichtung durch den Bandführungskanal 41 zu führen. Möglich wäre es auch, das Band quer zu seiner Längsrichtung in ein Kopfstück einzuführen. Dann müßte ein Bandführungskanal vorgesehen werden, der zur Stirnseite hin offen ist. Das Hinführen des Bandes könnte mittels geeigneter Führungsschienen erfolgen.

Wie aus Fig. 3 ersichtlich, verbreitert sich der Bandführungskanal 41 in Richtung auf die Bandeinlaufseite, also zu der Bandführung 19 hin, die zwischen dem Kopfstück 35 und den Transportwalzen 16, 17 angeordnet ist. Umfangsseitig des Kopfstückes 35 wird der Bandeinführungskanal 41 durch ein Messer 42 begrenzt. Das Messer 42 ist plattenförmig ausgebildet und begrenzt den Umfang des Kopfstückes 35 nach Art einer Sekante. Die Messerschneide 43 befindet sich auf der der Stirnfläche 33 des Preßorgans 30 abgewandten Seite an der breitesten Stelle des Bandführungskanals 41. Das Messer 42 ist mittels eines Zentrierstiftes 44 und einer Schraube 45 am Kopfstück 35 befestigt. Das Gegenmesser 46 ist nachstellbar im Bereich der Bandführung 19 fest am Maschinengestell gelagert.

Das Kopfstück 35 ist mit dem von ihm aufgenommenen Preßorgan 30 stirnseitig an einer Steuerwelle 47 gelagert, deren hinterer Endabschnitt 48 mit einem motorischen Drehantrieb verbunden wird. Ein unterseits der Tischplatte 21 angeordneter Mitnehmerzapfen 49 wirkt mit Steuerkurven 50 der Steuerwelle 47 zusammen, so daß die Tischplatte in Richtung der Längsachse der Steuerwelle 47 hin- und herbewegt werden kann. Ferner trägt die Steuerwelle 47 einem Steuernocken 51, der, wie später beschrieben, mit dem Halter 27 für das Heizelement 26 zusammenwirkt. Schließlich sind noch Mittel an der Steuerwelle 47 vorgesehen zur Betätigung der Bandklemme 29. Auch dies wird später beschrieben werden.

Zum Verständnis der Wirkungsweise der Maschine sei anhand der Fig. 3 zunächst beschrieben, wie die dort dargestellte Lage des Bandes 13 erreicht wird. Nimmt man an, das Band 13 sei von Messer 42 und Gegenmesser 46 abgetrennt und das zuvor umreifte Packgut der Maschine entnommen, so wird nun zunächst die Bandeinschußvorrichtung 15 betätigt, so daß die Förderwalze 16 in Richtung des Pfeiles 18 angetrieben wird. Das Band wird nun mit seinem vorderen freien Endabschnitt voran durch den Bandführungskanal des in « Einschußstellung » gemäß Fig. 3 stehenden Kopfstückes 35 hindurch und in den Bandführungsrahmen 11 hineingeschoben, bis die vordere freie Bandkante 14a vollständig durch den Bandführungsrahmen 11 hindurchgeführt worden ist und einen nicht dargestellten Endschalter betätigt, der den Antrieb 15 stillsetzt. Jetzt ist die in Fig. 3 dargestellte Ausgangsstellung erreicht. Mit Hilfe fremder Steuermittel, z. B. mittels eines Elektromagneten, wird die Bandklemme 29 geschlossen und klemmt zwischen sich und der Tischunterseite 31 den vorderen freien Bandendabschnitt 14 ein. Jetzt wird die Antriebswalze 16 auf Rückzug geschaltet; sie dreht in Richtung des Teiles 18a in Fig. 5 entgegen dem Uhrzeigersinn und zieht das Band zurück mit der Folge, daß es — wie eingangs erläutert — aus dem Bandführungsrahmen 11 herausgezogen wird und sich um die Oberfläche des Packstücks 12 strammt. Eine z. B. zugspannungsgesteuerte Endabschaltung setzt den Antrieb 15 dann still. Jetzt oder auch schon während des Bandspannvorgangs wird, z. B. mittels eines Elektromagneten, das Heizelement 26 aus der funktionslosen Ruhestellung (Fig. 3) in den Zwickel 68 eingeführt, der zwischen dem Preßorgan 30 und der Bandanlagefläche 31 sowie zwischen den miteinander zu verschweißenden Bandflächen ausgebildet ist. Es ergibt sich die Stellung nach Fig. 5.

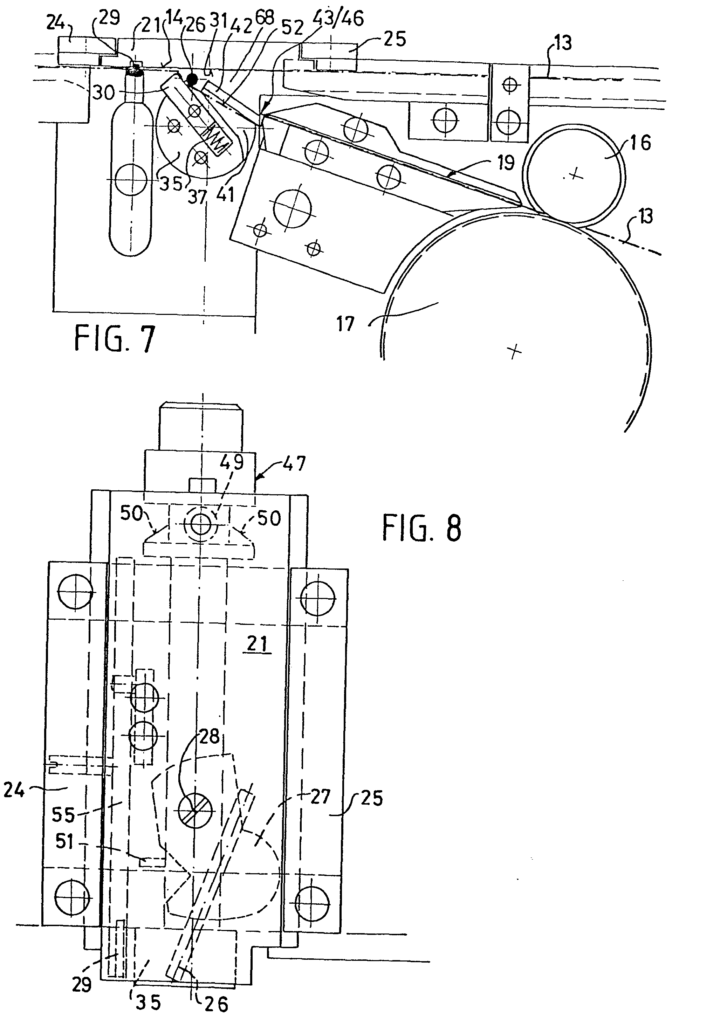

Jetzt beginnt die Rotationsbewegung des Preßorgans 30 und des Kopfstücks 35. Unmittelbar nachdem die Stirnfläche 33 des Druckstücks 30 die Bandenden gegen die Bandanlagefläche 31 drückt, wird die Bandtrennvorrichtung 43/46 wirksam, das Band wird einlaufseitig zerschnitten. Zuvor standen die Walzen 16 und 17 still und hielten das Band fest. Jetzt übernimmt das Preßorgan 30 die Funktion einer Bandklemme für das hintere Bandende 52, welches sich durch den Trennschnitt ausgebildet hat. Es liegt nun innerhalb des Bandführungskanals 41 des Kopfstücks 35, und der Schweißwiderstand 26 befindet sich auf der dem vorderen Bandabschnitt 14 zugekehrten Fläche des Bandendabschnitts 52 und beginnt, diese Fläche anzuschmelzen (Fig. 7, 8).

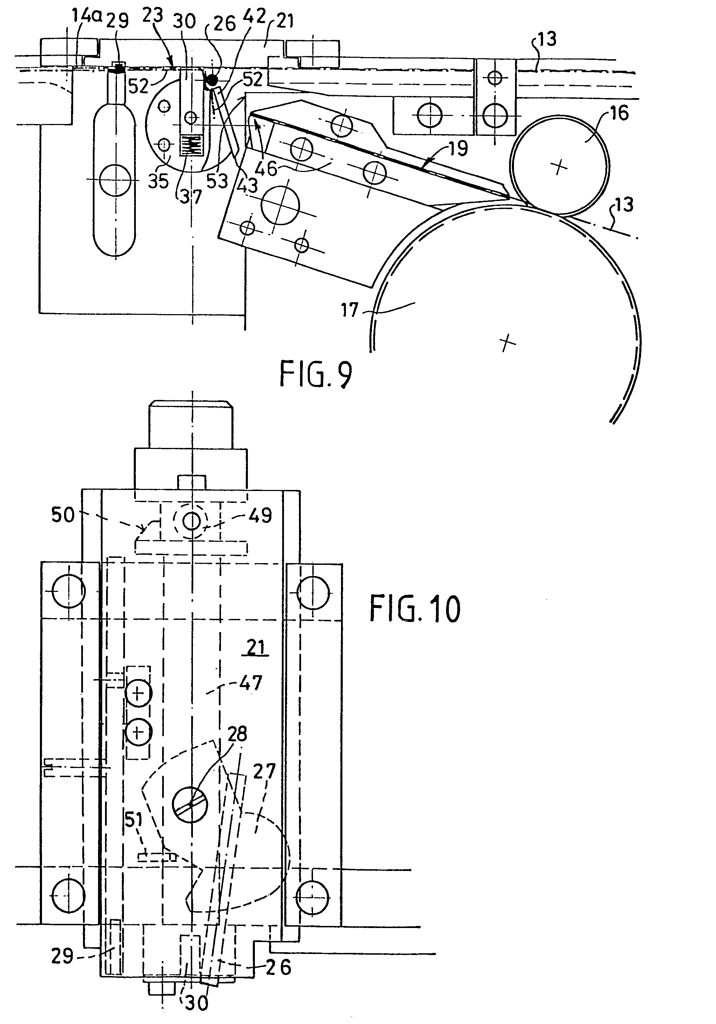

Werden Kopfstück 35 und Druckstück 30 weiter im Uhrzeigersinn verdreht, so bewirkt die die freie Kreisbahn 34 schneidende Bandanlagefläche 31, daß das Preßorgan 30 unter Wirkung der Rückstellfeder 37 in das Kopfstück 35 hinein ausweicht. Dies ist maximal beim Ausführungsbeispiel der Fall, wenn das Druckorgan senkrecht steht (Fig. 9). Auf seinem Weg von der Stellung gemäß Fig. 7 in die Stellung gemäß Fig. 9 hat das Druckorgan 30 das Heizelement 26 ein Stück vor sich her geschoben, wobei das Heizelement 26 in Richtung auf das freie Bandende 52 hin einen entsprechenden Bandabschnitt angeschmolzen hat. Das dem Heizelement 26 folgende Druckorgan 30 hat die entsprechende Weglänge der überlappenden Bandenden gegeneinandergepreßt.

Bei weiterer Rotation tritt das Preßorgan 30 wieder weiter aus dem Kopfstück 35 hervor, weil es unter Wirkung der Druckfeder 37 der tischunterseitigen vorzugsweise ebenen Bandanlagefläche 31 folgt, dabei das Heizelement 26 weiter vorschiebt und die restliche freie Länge des hinteren Bandendes 52 mit dem vorderen Bandendabschnitt 14 verpreßt. Das freie Bandende 52 gleitet dabei ungehindert aus dem Bandeinführungskanal 41 des Kopfstücks 35 heraus.

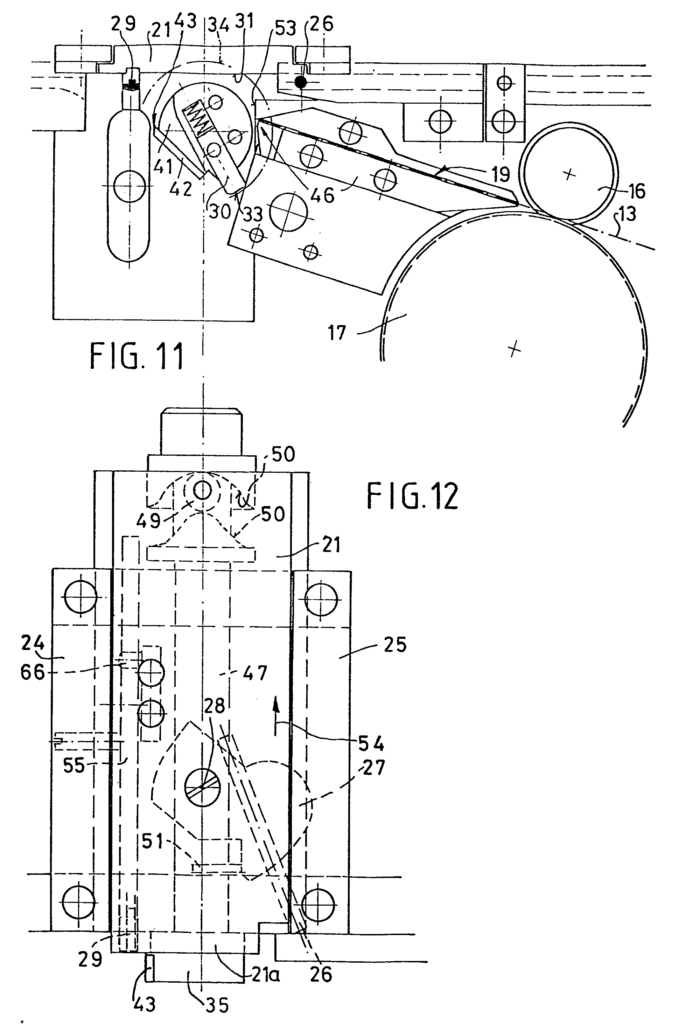

Damit sichergestellt ist, daß das von dem Preßorgan 30 aus dem Wirkbereich herausgeschobene Heizelement 26 den Bandkanal innerhalb des Bandführungsrahmens nicht behindert, ist eine Zwangsaussteuerung für das Heizelement 26 vorgesehen, die darin besteht, daß der bereits erwähnte, an der Steuerwelle 47 befindliche Nocken 51 auf den Halter 27 für das Heizelement 26 drückend einwirkt und so das Heizelement 26 vollständig aus der Verschlußebene V des Bandes 13 wieder herausbewegt (vgl. Fig. 10 und 12).

Damit das wieder entspannte vorstehende Preßorgan 30 nicht mit dem Gegenmesser 46 in Konflikt kommt und damit keine komplizierten Steuerungen des Gegenmessers 46 erforderlich sind, ist dem Gegenmesser 46 mit geringem Abstand eine Steuerfläche 53 vorgelagert, die die freie Kreisbahn 34 des Druckorgans 30 schneidet und damit das Druckorgan zurückdrückt, damit es das Gegenmesser 46 passieren kann. Etwa in dem Zeitraum, in dem das Druckorgan 30 an der Steuerfläche 53 entlanggeführt wird, wird die Tischplattensteuerung 49, 50 wirksam (Fig. 12); die Tischplatte 21 wird in Richtung des Pfeiles 54 vorübergehend mit ihrem vorderen Bereich 21a aus der Umschnürungsebene zurückbewegt, so daß sich das Band 13 auch im Bereich seines Verschlusses nunmehr unterseitig an das Packstück 12 heranlegen kann.

Der restliche Drehweg des Kopfstückes 35 von der Position nach Fig. 11 in diejenige nach Fig. 3 dient der Rückführung in die Ausgangslage und der Rückführung der Tischplatte 21 in die vorgeschobene Stellung. Das Arbeitsspiel kann nun von neuem beginnen.

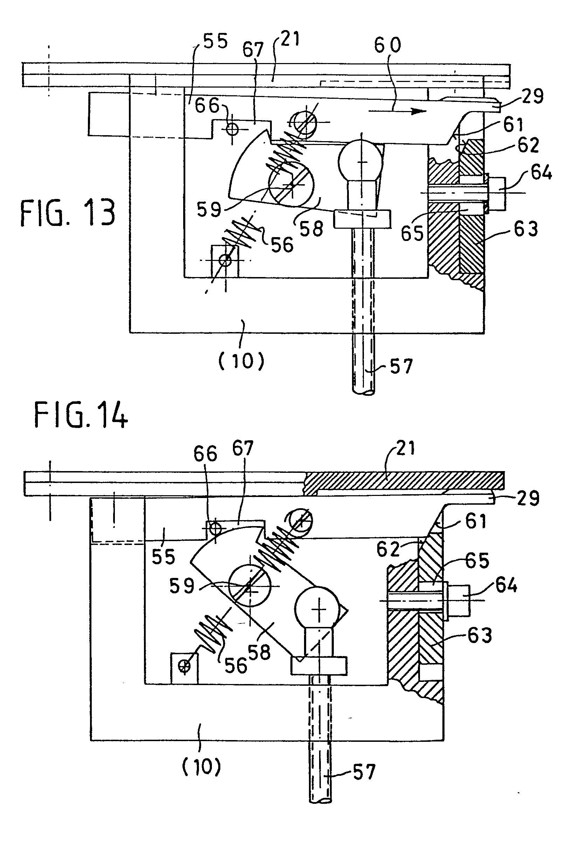

Eingangs wurde die das vordere freie Bandende 14 festhaltende Bandklemme 29 erwähnt. Zum Verständnis ihrer Steuerung dienen die Fig. 13 und 14 als Teil-Vertikalschnitt im Bereich der Bandklemme. Die Bandklemme 29 ist Bestandteil eines länglichen Hebels 55, der ständig unter Wirkung einer Zugfeder 56 steht, die bestrebt ist, die Bandklemme offenzuhalten.

Die Bandklemme 29 wird geschlossen, indem ein Schließantrieb, z. B. ein Elektromagnet, eine Zugstange 57 herunterzieht, die über einen zweiarmigen, bei 59 schwenkgelagerten Hebel 58 den Hebel 55 in Richtung des Pfeiles 60 vorschiebt. Mit einer schrägen Steuerfläche 61 läuft nun der Hebel 55 auf eine Gegen-Schrägfläche 62, die an einem Einsatzstück 63 maschinengestellfest angeordnet ist. Die Schrägflächen 61 und 62 bewirken, daß sich die Bandklemme 29 an die Unterseite 31 des Tisches 21 preßt, womit das in den Fig. 13 und 14 nicht eingezeichnete Band geklemmt werden kann. Das Einsatzstück 63 ist mit einer Schraube 64 befestigt und weist ein Langloch 65 auf, so daß es höhenverstellbar und die Klemmkraft nachstellbar ist. In den Fig. 13 und 14 sind unterschiedliche Stellungen des Einsatzstückes 63 verdeutlicht. Die Rückführung der Bandklemme 29 in die Offenstellung (Fig. 13) geschieht mit Hilfe der Steuerwelle 47, und zwar beim Ausführungsbeispiel mittelbar über die Steuerung der Tischplatte 21. Unterseitig ist an dieser ein Steuerstift 66 befestigt, der in einer Ausnehmung 67 des Hebels 55 eingreift. Mit der Rückzugbewegung der Tischplatte 21 entgegen der Richtung des Pfeiles 60 wird somit auch der Hebel 55 zurückgezogen und bleibt in der hinteren, gelüfteten Stellung (Fig. 13) so lange, bis die Zugstange 57 wieder betätigt wird.

Bei der anhand der Zeichnungen erläuterten Maschine ist in vorteilhafter Weise die Anordnung des Verschluß-Aggregats 22 derart ausgeführt, daß die durch die aufeinanderliegenden Flächen der Bandenden 14/52 definierte Verschlußebene V auf der von dem um das Packstück 12 herumgelegten Band definierten Umreifungsebene U im wesentlichen senkrecht steht und das Preßorgan 30 in der Umreifungsebene U umläuft. Das hat zur Folge, daß das Band 13 unverdrillt auch im Bereich des Verschluß-Aggregats geführt wird. Die Verschlußebene V könnte auch beispielsweise in der Umreifungsebene U liegen, wozu allerdings das Band im Wirkbereich des Verschluß-Aggregats etwa um 90° verdrillt werden müßte, was z. B. durch geeignete Umlenkschienen geschehen könnte. Dabei würde dann die Rotationsachse 32 des Preßorgans etwa lotrecht stehen, sich also nicht senkrecht zur Umreifungsebene, sondern parallel dazu erstrecken.

Abschließend sei bemerkt, daß bei einer besonders vorteilhaften Maschine nach der Erfindung das starr umlaufende Kopfstück 35 das an bzw. in ihm verschieblich gelagerte Preßorgan 30 trägt, daß das Band 13 durch das Kopfstück 35 hindurchgeführt und außenseitig von dem Messer 42 mit der Messerschneide 43 übergriffen ist, so daß das Messer eine funktions- und bewegungseinheitliche Einheit mit dem Kopfstück 35 darstellt. Auf diese Weise ist während der Rotation des Kopfstücks 35 mit dem Preßorgan 30 automatisch der Trennschnitt vollzogen, und das Preßorgan 30 kann an Stelle jeder besonderen Anordnung und Konstruktion als Bandklemme für das abgetrennte Bandende 52 wirken. wodurch sich in besonderem Maße eine überaus einfache und funktionssichere Maschine ergibt, die hohe Taktzahlen störungsfrei zuläßt.

## Ansprüche

1. Maschine zum Umreifen von Packstücken (12) mittels eines schweißbaren Kunststoffbandes (13), wobei zwischen die miteinander zu verschweißenden, sich überlappenden Bandenden (14, 52) vorübergehend ein Heizelement (26) einfügbar ist, die angeschmolzenen Flächen der Bandenden mit einem Preßorgan (30) aneinander und gegen eine Bandanlagefläche (31) gedrückt werden und wobei ferner eine mindestens ein Bandende vorübergehend festlegende Bandklemme (29) sowie am Bandeinlauf eine Messer (42) und Gegenmesser (46) aufweisende Bandtrennvorrichtung vorgesehen sind, dadurch gekennzeichnet, daß das Preßorgan (30) um eine sich mindestens annähernd parallel zur Verschlußebene (V) und etwa senkrecht zur Bandlängsrichtung erstreckende Achse (32) umlaufend rotierbar angeordnet ist, wobei die Bandanlagefläche (31) die freie Kreisbahn (34) des Preßorgans (30) schneidet und wobei Bandanlagefläche (31) und Preßorgan (30) über ihren etwa der Länge der von dem Heizelement (26) erzeugten Schweißzone entsprechenden Kontaktweg hinweg — bei Zwischenlage der beiden Bandenden (14, 52) — entgegen Wirkung einer Rückstellkraft ausweichbar gegeneinanderdrücken.

2. Maschine nach Anspruch 1, dadurch gekennzeichnet, daß die Bandanlagefläche (31) als im wesentlichen starres Widerlager für das Preßorgan (30) ausgebildet ist, welches entgegen Wirkung einer Rückstellfeder (37) quer zu seiner Rotationsachse (32) verschieblich gelagert ist.

3. Maschine nach Anspruch 1 oder 2, dadurch gekennzeichnet, daß das Preßorgan (30) an einem auf einer mit der Rotationsachse (32) fluchtenden Steuerwelle (47) endseitig angeordneten Kopfstück (35) verschieblich gelagert ist.

4. Maschine nach Anspruch 3, dadurch gekennzeichnet, daß an dem Kopfstück (35) das Messer (42) befestigt ist.

5. Maschine nach Anspruch 4, dadurch gekennzeichnet, daß das im wesentlichen plattenförmige Messer (42) etwa am Umfang des Kopfstücks (35) angeordnet ist und einen sich von der Messerschneide (43) in Richtung auf das im Drehsinn dahinter angeordnete Preßorgan (30) erstreckenden Bandführungskanal (41) begrenzt.

6. Maschine nach Anspruch 5, dadurch gekennzeichnet, daß sich der Bandführungskanal (41) zum Bandeinlauf (bei 15) hin erweitert.

7. Maschine nach Anspruch 1 oder einem der folgenden 2 bis 6, insbesondere nach Anspruch 4 oder 5, dadurch gekennzeichnet, daß das Preßorgan (30) zugleich als Bandklemme für das von der Bandtrennvorrichtung (43/46) abgetrennte hintere freie Bandende (52) ausgebildet ist, indem es unmittelbar vor oder etwa im Zeitpunkt des Trennschnitts das Bandende (52) entgegen der Rückzugspannung des Bandes (13) gegen die Bandanlagefläche (31) preßt.

8. Maschine nach Anspruch 5, dadurch gekennzeichnet, daß der Abstand zwischen der Messerschneide (43) und dem entspannten Preßorgan (30) im wesentlichen gleich der Länge des Kontaktweges von Preßorgen (30) und Bandanlagefläche (31) ist.

9. Maschine nach Anspruch 1 oder einem der folgenden 2 bis 8, dadurch gekennzeichnet, daß dem Preßorgan (30) eine es zurückdrängende Steuerfläche (53) zugeordnet ist, die im Wirkbereich des Gegenmessers (46) angeordnet ist und geringfügig gegenüber diesem vorsteht.

10. Maschine nach Anspruch 1 oder einem der folgenden 2 bis 9, dadurch gekennzeichnet, daß in den zwischen dem Preßorgan (30) und der Bandanlagefläche (31) sowie zwischen den Bandenden (14, 52) ausgebildeten Zwickel (68) das Heizelement (26) taktgesteuert einrückbar ist und durch druckschlüssige Einwirkung des Preßorgans (30) von diesem zwischen den Bandenden (14, 52) vortreibbar ist.

11. Maschine nach Anspruch 10, dadurch gekennzeichnet, daß das Heizelement (26) eine Heizpatrone geringen Durchmessers ist und in dichter Zuordnung parallel zur Bandanlagefläche (31) um eine quer zur Rotationsachse (32) des Preßorgans (30) verlaufende Achse (28) schwenkbar angeordnet ist.

12. Maschine nach Anspruch 11, dadurch gekennzeichnet, daß die Schwenkachse (28) des Heizelements (26) im Bereich der Tischplatte (21) angeordnet ist.

13. Maschine nach Anspruch 1 oder einem der folgenden 2 bis 12, dadurch gekennzeichnet, daß die Bandanlagefläche (31) an der Unterseite einer nach Vollendung des Schweiß- und Preßvorgangs vorübergehend aus der Umreifungsebene (U) entfernbar angeordneten Tischplatte (21) ausgebildet ist.

14. Maschine nach der Kombination der Ansprüche 3 und 13, dadurch gekennzeichnet, daß die Bandklemme (29), die Tischplatte (21) und das Heizelement (26) mindestens über Teile ihrer jeweiligen Bewegungsbahn hinweg durch an der Steuerwelle (47) angeordnete Mitnehmer bzw. Nocken (66, 49, 51) taktgesteuert bewegbar sind.

15. Maschine nach einem der Ansprüche 3 bis 6 und 8, dadurch gekennzeichnet, daß einem Arbeitszyklus der Maschine eine volle Umdrehung der Steuerwelle (47) und des mit ihr verbundenen Preßorgans (30) entspricht.

16. Maschine nach Anspruch 1 oder 13, dadurch gekennzeichnet, daß die durch die aufeinanderliegenden Flächen der Bandenden (14/52) definierte Verschlußebene (V) auf der von dem um das Packstück (12) herumgelegten Band definierten Umreifungsebene (U) im wesentlichen senkrecht steht und das Preßorgan (30) in der Umreifungsebene (U) umläuft.

## Claims

1. Machine for strapping packages (12) by means of a weldable plastic tape (13), a heating element (26) being temporarily insertable between the mutually overlapping tape ends (14, 52) which are to be welded together, the incipiently melted surfaces of the tape ends being pressed against each other by a press element (30) and against a tape contact face (31), and also a tape clamp (29), which temporarily fixes at least one tape end, and, at the tape inlet, a tape-severing device comprising cutters (42) and counter-cutters (46) being provided, characterised in that the press element (30) is arranged rotatably to revolve about an axis (32) which extends at least approximately parallel to the closing plane (V) and approximately perpendicular to the longitudinal direction of the tape, the tape contact face (31) intersecting the free circular path (34) of the press element (30), and the tape contact face (31) and the press element (30) — while the two tape ends (14, 52) are interposed — yieldingly pressing onto one another, against the action of a restoring force, beyond their contact length corresponding approximately to the welding zone produced by the heating element (26).

2. Machine according to Claim 1, characterised in that the tape contact face (31) is formed as an essentially rigid abutment for the press element (30) which is mounted to be displaceable transversely to its axis (32) of rotation against the action of a restoring spring (37).

3. Machine according to Claim 1 or 2, characterised in that the press element (30) is displaceably mounted on a head piece (35) located on the end of a control shaft (47) aligned with the axis (32) of rotation.

4. Machine according to Claim 3, characterised in that the cutter (42) is fastened to the head piece (35).

5. Machine according to Claim 4, characterised in that the essentially plate-shaped cutter (42) is arranged approximately on the periphery of the head piece (35) and delimits a tape-guide channel (41), which extends from the cutter edge (43) in the direction of the press element (30) located downstream in the sense of rotation.

6. Machine according to Claim 5, characterised in that the tape-guide channel (41) widens towards the tape inlet (at 15).

7. Machine according to Claim 1 or one of the subsequent Claims 2 to 6, in particular according to Claim 4 or 5, characterised in that the press element (30) is simultaneously designed as a type clamp for the free rear tape end (52) severed by the tape-severing device (43/46), the press element pressing the tape end (52) onto the tape contact face (31), against the pull-back tension of the tape (13), immediately before or approximately at the time of the severing cut.

8. Machine according to Claim 5, characterised in that the distance between the cutter edge (43) and the relieved press element (30) is substantially equal to the length of the contact path of the press element (30) and tape contact face (31).

9. Machine according to Claim 1 or one of the subsequent Claims 2 to 8, characterised in that the press element (30) is associated with a control surface (53) which forces it back and which is arranged in the action zone of the counter-cutter (46) and projects slightly beyond the latter.

10. Machine according to Claim 1 or one of the subsequent Claims 2 to 9, characterised in that the heating element (26) can, under cycle control, be inserted into the toe (68) formed between the press element (30) and the tape contact face (31) as well as between the tape ends (14, 52) and can be driven forward between the tape ends (14, 52) by the press element (30) under its pressure-friction effect.

11. Machine according to Claim 10, characterised in that the heating element (26) is a heating cartridge of small diameter and is arranged to be pivotable in close association parallel to the tape contact face (31) about an axis (28) extending transversely to the axis (32) of rotation of the press element (30).

12. Machine according to Claim 11, characterised in that the pivoting axis (28) of the heating element (26) is located in the region of the table top (21).

13. Machine according to Claim 1, or one of the subsequent Claims 2 to 12, characterised in that the tape contact face (31) is formed on the underside of a table top (21) which is arranged to be temporarily removable from the strapping plane (U) after completion of the welding and pressing step.

14. Machine according to a combination of Claims 3 and 13, characterised in that the tape clamp (29), the table top (21) and the heating element (26) can be moved under cycle control at least over parts of their particular movement track, by means of dogs or cams (66, 49, 51) provided on the control shaft (47).

15. Machine according to one of Claims 3 to 6 and 8, characterised in that one full revolution of the control shaft (47) and the press element (30) joined thereto corresponds to one working cycle the machine.

16. Machine according to Claim 1 or 13, characterised in that the closing plane (V) defined by the superposed surfaces of the tape ends (14/52) is substantially perpendicular to the strapping plane (U) defined by the tape laid around the package (12), and the press element (30) revolves in the strapping plane (U).

**Revendications**

1. Machine à banderoler des paquets (12) au moyen d'un ruban de matière synthétique soudable (13), un élément chauffant (26) pouvant s'insérer temporairement entre les extrémités de ruban (14, 52) qui se chevauchent et qui doivent être soudées, les surfaces partiellement fondues des extrémités de ruban étant poussées par un organe presseur (30) l'une contre l'autre et contre une surface (31) d'application du ruban et, en outre, une pince à ruban (23) étant prévue et fixant temporairement au moins une extrémité de ruban, et un dispositif de coupage de ruban étant prévu à l'entrée du ruban et présentant une lame (42) et une contre-lame (46), caractérisée par le fait que l'organe presseur (30) est disposé de manière à pouvoir tourner autour d'un axe (32) dirigé au moins approximativement parallèlement au plan de fermeture (V) et à peu près perpendiculairement à la direction longitudinale du ruban, la surface (31) d'application de ruban (31) coupant la trajectoire libre (34) de l'organe presseur (30) et la surface d'application (31) du ruban et l'organe presseur (30) — lorsque les deux extrémités de ruban (14, 52) sont interposées — poussant l'un contre l'autre à l'encontre de l'action d'une force de rappel, tout en pouvant céder, sur leur parcours de contact correspondant à peu près à la longueur de la zone de soudage engendrée par l'élément chauffant (26).

2. Machine selon la revendication 1, caractérisée par le fait que la surface d'application de ruban (31) est conçue sous la forme d'une butée pratiquement rigide pour l'organe presseur (30), qui est monté de manière à pouvoir coulisser transversalement à son axe de rotation (32) à l'encontre de l'action d'un ressort de rappel (37).

3. Machine selon la revendication 1 ou 2, caractérisée par le fait que l'organe presseur (30) est monté de manière à pouvoir coulisser sur une tête (35) disposée à une extrémité d'un arbre de commande (47) aligné sur l'axe de rotation (32).

4. Machine selon la revendication 3, caractérisée par le fait qu'à la tête (35) est fixée la lame (42).

5. Machine selon la revendication 4, caractérisée par le fait que la lame essentiellement en forme de plaque (42) est disposée à peu près à la circonférence de la tête (35) et limite un conduit (41) de guidage du ruban qui s'étend, du tranchant (43) de la lame, en direction de l'organe presseur (30), disposé derrière dans le sens de rotation.

6. Machine selon la revendication 5, caractérisée par le fait que le conduit (41) de guidage du ruban s'élargit en direction de l'entrée de ruban (en 15).

7. Machine selon la revendication 1 ou l'une des suivantes 2 à 6, en particulier selon l'une des revendications 4 et 5, caractérisée par le fait que l'organe presseur (30) est en même temps conçu comme pince de ruban pour l'extrémité postérieure libre (52) du ruban, séparée par le dispositif de coupage du ruban, du fait qu'immédiatement avant la coupe de séparation ou à peu près au moment de celle-ci, il pousse l'extrémité de bande (52) contre la surface (31) d'application du ruban, à l'encontre de la tension de rappel du ruban (13).

8. Machine selon la revendication 5, caractérisée par le fait que la distance entre le tranchant (43) de la lame et l'organe presseur (30) détendu est pratiquement égale à la longueur du parcours de contact de l'organe presseur (30) et de la surface (31) d'application du ruban.

9. Machine selon la revendication 1 ou l'une des suivantes 2 à 8, caractérisée par le fait qu'à l'organe presseur (30) est adjointe une surface de commande (53) qui le repousse, qui est disposée dans la région d'action de la contre-lame (46) et qui fait légèrement saillie par rapport à celle-ci.

10. Machine selon la revendication 1 ou l'une des suivantes 2 à 9, caractérisée par le fait que dans le coin (68), formé entre l'organe presseur (30) et la surface (31) d'application du ruban, ainsi qu'entre les extrémités (14, 52) du ruban, l'élément chauffant (26) peut être enfoncé de façon rythmée et que par une action de pression de l'organe presseur (30), il peut être poussé en avant par celui-ci entre les extrémités (14, 52) du ruban.

11. Machine selon la revendication 10, caractérisée par le fait que l'élément chauffant (26) est une cartouche chauffante de petit diamètre et qu'il est disposé avec une corrélation rapprochée parallèlement à la surface (31) d'application du ruban de manière à pouvoir pivoter autour d'un axe (28) dirigé transversalement à l'axe de rotation (32) de l'organe presseur (30).

12. Machine selon la revendication 11, caractérisée par le fait que l'axe de pivotement (28) de l'élément chauffant (26) est disposé dans la région du panneau de table (21).

13. Machine selon la revendication 1 ou l'une des suivantes 2 à 12, caractérisée par le fait que la surface (31) d'application du ruban est formée à la face inférieure d'un panneau de table (21) disposé de manière à pouvoir être retiré temporairement du plan de banderolage (U) après l'achèvement du processus de soudage et de compression.

14. Machine selon la combinaison des revendications 3 et 13, caractérisée par le fait que la pince (29) du ruban, le panneau de table (21) et l'élément chauffant (26) peuvent être déplacés de façon rythmée, au moins sur des parties de leur trajectoire respective, par des entraîneurs ou cames (66, 49, 51) disposés sur l'arbre de commande (47).

15. Machine selon l'une des revendications 3 à 6 et 8, caractérisée par le fait qu'à un cycle de travail de la machine correspond un tour complet de l'arbre de commande (47) et de l'organe presseur (30) qui lui est relié.

16. Machine selon la revendication 1 ou 13, caractérisée par le fait que le plan de fermeture (V) défini par les surfaces appliquées l'une sur l'autre des extrémités (14, 52) du ruban est pratiquement perpendiculaire au plan de banderolage défini par le ruban placé autour du paquet (12) et que l'organe presseur (30) tourne dans le plan de banderolage.

# FIG.1

# FIG. 2

FIG. 3

FIG. 4

FIG. 5

FIG. 6

FIG. 7

FIG. 8

**FIG. 9**

**FIG. 10**

**FIG. 11**

**FIG. 12**

FIG. 13

FIG.14